# EUROPÄISCHE PATENTSCHRIFT

(11) **EP 1 198 466 B1**
(45) Veröffentlichungstag und Bekanntmachung des Hinweises auf die Patenterteilung: **02.04.2003**
(21) Anmeldenummer: 00956244.8
(22) Anmeldetag: 21.07.2000
(51) Int. Cl.: C07F 9/38

(54) **VERFAHREN ZUR HERSTELLUNG VON GLYPHOSATE ODER EINES SALZES DAVON**
METHOD OF PRODUCING GLYPHOSATE OR A SALT THEREOF
PROCEDE DE PRODUCTION DE GLYPHOSATE OU D'UN SEL DE CELUI-CI

(30) Priorität: 23.07.1999 DE 19934599
(43) Veröffentlichungstag der Anmeldung: 24.04.2002
(73) Patentinhaber: BASF AKTIENGESELLSCHAFT, 67056 Ludwigshafen (DE)
(72) Erfinder: MÜLLER, Ulrich, 67435 Neustadt (DE); MERKLE, Hans, Rupert, 67061 Ludwigshafen (DE)
(74) Vertreter: Isenbruck, Günter, Dr.
(86) Internationale Anmeldenummer: EP0007003
(87) Internationale Veröffentlichungsnummer: WO01007447

(56) Entgegenhaltungen:
- EP-A- 0 019 445
- EP-A- 0 472 693
- US-A- 4 582 650
- CHEMICAL ABSTRACTS, vol. 122, no. 11, 13. März 1995 (1995-03-13) Columbus, Ohio, US; abstract no. 133413, OBESO CACERES R M ET AL: "Prepration of N-phosphonomethylglycine from N-(phosphonomethyl)iminodiacetic acid" XP002154752 & ES 2 050 624 A (ARAGONESAS AGRO, S.A.;SPAIN) 16. Mai 1994 (1994-05-16)

## Beschreibung

Die vorliegende Erfindung betrifft ein neuartiges Verfahren zur Herstellung von N-Phosphonomethylglycin (Glyphosate) oder eines Salzes davon durch In-Kontakt-Bringen von Phosphonomethyliminodiessigsäure (PMIDE) mit mindestens einem sauerstoffhaltigen Oxidationsmittel in Gegenwart eines Heterogenkatalysators, der Silicate enthält.

Verfahren zur Herstellung von Glyphosate sowie dessen Salze sind an sich bekannt. Dabei wird stets PMIDE oder ein Salz davon mittels eines Oxidationsmittels, wie z.B. eines ein Hydroperoxid oder ein Sauerstoff enthaltenden Gases in An- oder Abwesenheit eines Katalysators zu Glyphosate oder einem Salz davon umgesetzt. So beschreibt die US 3 954 848 die oben beschriebene Umsetzung in Abwesenheit eines Katalysators unter Verwendung von darin definierten Oxidationsmitteln bei Temperaturen von ungefähr 70 bis 100 °C.

Die Umsetzung in Gegenwart von freien Sauerstoff enthaltenden Gasen unter Verwendung von Platin, Palladium, Rhodium, Iridium, Ruthenium oder Osmium als metallischem Katalysator wird in der US 3 950 402 beschrieben.

Die US 3 969 398 beschreibt eine eben solche Umsetzung in Gegenwart von Aktivkohle. Die US 4 582 650 beschreibt ein Verfahren zur Herstellung von N-Phosphonomethylglycin durch oxidative Spaltung von N-Phosphonomethyliminodiessigsäure unter gleichzeitiger Oxidation des als Nebenprodukt anfallenden Formaldehyds in Gegenwart eines Katalysatorsystems, das neben Aktivkohle ein mikroporöses säurebeständiges Aluminosilicat mit einem Verhältnis Si zu Al von mindestens 2 als Träger mit einem Edelmetall als Aktivkomponente umfaßt. Ausweislich dieser Schrift wird das Verfahren so durchgeführt bzw. der Katalysator so präpariert, daß sich das Edelmetall in den Poren des Trägermaterials befindet und somit durch N-Phosphonomethylamine nicht vergiftet werden kann.

Die Herstellung von Salzen des Glyphosats in Gegenwart von Platin auf aktiviertem Kohlenstoff unter Verwendung eines Sauerstoff enthaltenden Gases wird in der US 4 147 719 beschrieben.

Die ungarische Patentanmeldung HU 187 347 beschreibt eine derartige Umsetzung unter Verwendung von Peroxiden in Gegenwart einer katalytischen Menge von Silber, Eisen, Zinn, Blei, Mangan oder Molybdän.

Eine derartige Umsetzung in wäßriger Suspension wird in der EP-A 0 019 445 beschrieben. Ein Verfahren der hier in Rede stehenden Art unter Verwendung von molekularem Sauerstoff in Anwesenheit eines Katalysators, der ausgewählt wird aus Salzen und Salzkomplexen von Mangan, Kobalt, Eisen, Nickel, Brom, Ruthenium, Aluminium, Molybdän, Palladium und Cer bei Temperaturen im Bereich von ungefähr 25 bis 150 °C bei Atmosphären- oder Subatmosphärendruck wird in der EP-B 0 314 662 und den entsprechenden Parallelpatenten beschrieben.

Ein Verfahren zur selektiven Herstellung von sekundären Aminen, ausgehend von tertiären Aminen, bzw. von primären Aminen, ausgehend von sekundären Aminen mittels Sauerstoff oder einem sauerstoffhaltigen Gas in Anwesenheit eines Aktivkohlekatalysators, dessen Oberfläche frei von Oxiden ist, wird in der EP-B 0 162 035 und deren Parallelpatenten beschrieben. Die EP-A 0 464 017 sowie deren Parallelpatente betreffen ein Verfahren zur Herstellung von Glyphosate durch Oxidation von PMIDE mittels eines Peroxids in Gegenwart einer katalytischen Menge von Eisen, Zink, Aluminium, Palladium oder Kupfer oder wasserlöslichen V-, Fe- oder Cu-Verbindungen.

Die Verwendung von wasserlöslichen Wolfram-Verbindungen oder eines Gemischs aus einer wasserlöslichen Wolfram- und einer wasserlöslichen Molybdän-Verbindung innerhalb eines Verfahrens der hier in Rede stehenden Art wird in der EP-A 0 464 018 beschrieben.

Ein Verfahren zur Herstellung von Glyphosate durch Oxidation von PMIDE unter Druck mit Sauerstoff oder einem Sauerstoff enthaltendem Gas in Gegenwart eines Katalysators aus Edelmetall, welches auf Aktivkohle als Träger vorliegt, beschreibt die EP-B 0 472 693, wobei dort die Konzentration des Edelmetalls im Reaktionsmedium auf weniger als 1 ppm vermindert wird.

Ein Verfahren der hier in Rede stehenden Art unter Verwendung von mit Wasserstoffperoxid oder Sauerstoff angereicherter Luft bei Drücken von 100 bis 1000 bar beschreibt die WO 96/19485.

Die Umsetzung von PMIDE zu Glyphosate in Gegenwart von H₂O₂ und aktiviertem Kohlenstoff wird in der WO 96/27602 sowie in der WO 96/38455 beschrieben.

In Anbetracht des Standes der Technik lag der vorliegenden Erfindung die Aufgabe zugrunde, ein neuartiges Verfahren zur Herstellung von Glyphosate durch oxidative Behandlung von PMIDE bereitzustellen, das die Zielverbindung Glyphosate in hoher Ausbeute liefern sollte.

Somit betrifft die vorliegende Erfindung ein Verfahren zur Herstellung von N-Phosphonomethylglycin oder eines Salzes davon durch In-Kontakt-Bringen von Phosphonomethyliminodiessigsäure oder eines Salzes davon mit mindestens einem sauerstoffhaltigen Oxidationsmittel in Gegenwart eines Heterogenkatalysators, wobei der Heterogenkatalysator mindestens ein Silicat enthält.

Wie oben ausgeführt, wird im Rahmen des vorliegenden Verfahrens PMIDE, das nach den aus dem Stand der Technik bekannten Verfahren hergestellt werden kann, zu Glyphosate umgesetzt. Darüber hinaus können Salze des PMIDE zu den entsprechenden Glyphosatesalzen umgesetzt werden. Geeignete salzbildende Kationen schließen Alkalimetalle, Erdalkalimetalle, Trimethylsulfonium, Guanidinium, Harnstoff, Ammonium und organische Ammoniumsalze, wie z.B. Isopropy-Iammoniumsalz ein. Letztere können z.B. ausgehend von organischen Aminen, wie z.B. Alkylaminen, Alkylenaminen und Alkanolaminen mit nicht mehr als zwei Amingruppen erhalten werden. Geeignete, Glyphosatesalze sind beispielsweise in der US 4 147 719 sowie der WO 96/38455 beschrieben. Diese Glyphosatesalze werden ausgehend von den entsprechenden PMIDE-Salzen wie nachfolgend beschrieben erhalten, wobei die als Ausgangsmaterialien verwendeten PMIDE-Salze ebenfalls nach allen aus dem Stand der Technik bekannten Verfahren, wie z.B. der Umsetzung von PMIDE mit z.B. NaOH, erhalten werden können. Erfindungsgemäß können dabei sowohl die Monosalze als auch die Disalze des PMIDE als Ausgangsmaterialien eingesetzt werden, die dann wiederum zu den entsprechenden Mono- bzw. Diglyphosatesalzen umgesetzt werden.

Als Oxidationsmittel kann im erfindungsgemäßen Verfahren prinzipiell jedes sauerstoffhaltige Oxidationsmittel eingesetzt werden. Insbesondere zu nennen sind organische Peroxide, Wasserstoffperoxid, Sauerstoff, Sauerstoff liefernde Verbindungen und Stickoxide, wie z.B. N₂O. Organische Peroxide schließen beispielsweise tert.-Butylhydroperoxid, Cumoylhydroperoxid, Peressigsäure, Perbenzoesäure, Peroxidtrifluoressigsäure, m-Chlorperbenzoesäure, Benzoylperoxid, Benzolpersulfonsäure ein. Neben reinem Sauerstoff können auch alle Sauerstoff enthaltenden Gase, wie z.B. Luft oder Gemische aus Sauerstoff und verdünnenden inerten Gasen, wie z.B. Helium, Argon oder Stickstoff eingesetzt werden. Als Sauerstoff liefernde Verbindungen sind folgende bevorzugt: H₂O₂ und in-situ aus O₂ und H₂ hergestelltes H₂O₂. Insbesondere wird eine wäßrige H₂O₂-Lösung eingesetzt; weiter bevorzugt hat diese Lösung einen Gehalt an H₂O₂ von 5 bis 60 Gew.-%.

Der erfindungsgemäße Heterogenkatalysator enthält mindestens ein Silicat, wobei auch hier alle denkbaren Silicate eingesetzt werden können. Insbesondere werden als Silicate Schichtsilicate, natürlich vorkommende oder synthetisch hergestellte Tonmineralien, Zeolithe, Clathrasile oder Gemische aus zwei oder mehreren davon eingesetzt.

Zeolithe sind bekanntermaßen kristalline Alumosilicate mit geordneten Kanalund Käfigstrukturen, deren Porenöffnungen im Bereich von Mikroporen kleiner 0,9 nm liegen. Das Netzwerk solcher Zeolithe ist aufgebaut aus SiO₄⁻ und AlO₄⁻-Tetraedern, die über gemeinsame Sauerstoffbrücken verbunden sind. Eine Übersicht der bekannten Strukturen findet sich beispielsweise bei M. W. Meier, D. H. Olson, Ch. Baerlocher "Atlas of Zeolite Structure Types" 4. Auflage, Elsevier, London, 1996.

Zum Ausgleich der negativen Elektrovalenz, die durch den Einbau von Al(III) in das Si(IV)-Silicatgitter entsteht, findet man bei Zeolithen austauschfähige Kationen; insbesondere kann es sich dabei je nach Herstellungsverfahren um Natrium-, Kalium-, Lithium- oder Cäsiumkationen handeln. Ersetzt man diese Kationen gegen Protonen, beispielsweise durch einen Ionenaustausch, so erhält man die entsprechend aziden Festkörper mit Zeolithstruktur in der sogenannten H-Form.

Es sind nun auch Zeolithe bekannt, die kein Aluminium enthalten und bei denen im Silicatgitter anstelle des Si(IV) teilweise Titan als Ti(IV) steht. Diese Titanzeolithe, insbesondere solche mit einer Kristallstruktur vom MFI-Typ, sowie Möglichkeiten zu Ihrer Herstellung sind, beispielsweise in der EP-A 0 311 983 oder der EP-A 405 978 beschrieben. Außer Silicium und Titan können solche Materialien auch zusätzliche Elemente wie z. B. Aluminium, Zirkonium, Zinn, Eisen, Kobalt, Nickel, Gallium, Bor oder geringe Menge an Fluor enthalten. In den in dem erfindungsgemäßen Verfahren verwendeten Zeolith-Katalysatoren kann das Titan des Zeoliths teilweise oder vollständig durch Vanadium, Zirkonium, Chrom oder Niob oder ein Gemisch aus zwei oder mehreren davon ersetzt sein. Das molare Verhältnis von Titan und/oder Vanadium, Zirkonium, Chrom oder Niob zur Summe aus Silicium und Titan und/oder Vanadium und/oder Zirkonium, und/oder Chrom und/oder Niob liegt in der Regel im Bereich von 0,01 : 1 bis 0,1 : 1.

Titanzeolithe mit MFI-Struktur sind dafür bekannt, daß sie über ein bestimmtes Muster bei der Bestimmung ihrer Röntgenbeugungsaufnahmen sowie zusätzlich über eine Gerüstschwingungsbande im Infrarotbereich (IR) bei etwa 960 cm⁻¹ identifiziert werden können.

Vorzugsweise werden Ti-, Ge-, Te-, V-, Cr-, Nb-, Zr-Zeolithe und insbesondere Ti-Zeolithe eingesetzt.

Dabei sind im einzelnen titan-, vanadium-, chrom-, niob-, zirkoniumhaltige Zeolithe mit Pentasil-Zeolith-Struktur, insbesondere die Typen mit röntgenografischer Zuordnung zur ABW-, ACO-, AEI-, AEL-, AEN-, AET-, AFG-, AFI-, AFN-, AFO-, AFR-, AFS-, AFT-, AFX-, AFY-, AHT-, ANA-, APC-, APD-, AST-, ATN-, ATO-, ATS-, ATT-, ATV-, AWO-, AWW-, BEA, BIK-, BOG-, BPH-, BRE-, CAN-, CAS-, CFI-, CGF-, CGS-, CHA-, CHI-, CLO-, CON-, CZP-, DAC-, DDR-, DFO-, DFT-, DOH-, DON-, EAB-, EDI-, EMT-, EPI-, ERI-, ESV-, EUO-, FAU-, FER-, GIS-, GME-, GOO-, HEU-, IFR-, ISV-, ITE-, JBW-, KFI-, LAU-, LEV-, LIO-, LOS-, LOV-, LTA-, LTL-, LTN-, MAZ-, MCM-22, MEI-, MEL-, MEP-, MER-, MFI-, MFS-, MON-, MOR-, MSO-, MTF-, MTN-, MTT-, MTW-, MWW-, NAT-, NES-, NON-, OFF-, OSI-, PAR-, PAU-, PHI-, RHO-, RON-, RSN-, RTE-, RTH-, RUT-, SAO-, SAT-, SBE-, SBS-, SBT-, SFF-, SGT-, SOD-, STF-, STI-, STT-, TER-, THO-, TON-, TSC-, VET-, VFI-, VNI-, VSV-, WEI-, WEN-, YUG-, ZON- und ITQ-4-Struktur sowie zu Mischstrukturen aus zwei oder mehreren der vorgenannten Strukturen zu nennen. Denkbar sind für den Einsatz im erfindungsgemäßen Verfahren weiterhin titanhaltige Zeolithe mit der Struktur des UTD-1, CIT-1 oder CIT-5. Als weitere titanhaltige Zeolithe sind solche mit der Struktur des ZSM-48 oder ZSM-12 zu nennen.

Als besonders bevorzugte Katalysatoren sind im einzelnen die Titan-enthaltenden Zeolith-Katalysatoren, die im allgemeinen als "TS-1", "TS-2", "TS-3", "ZSM-48" und "ZSM-12" bezeichnet werden, jeweils mit Ti, TTM-1, Ti-RUT, titanhaltige Zeolithe des Typs "UTD-1", "CIT-5" und "SSZ-24" sowie Ti-Zeolithe mit einer zu β-Zeolith-isomorphen Gerüststruktur zu nennen.

Zum Beispiel werden Titanzeolithe eingesetzt, wie sie beispielsweise aus der US 3 329 481 bekannt sind. Bei derartigen Titanzeolithen wird ein Teil des ursprünglich im Silicatgitter vorhandenen Si(IV) durch Titan als Ti(IV) ersetzt. Weitere Titanzeolithe, insbesondere solche mit einer Kristallstruktur vom MFI-Typ sowie Möglichkeiten zu ihrer Herstellung sind u.a. in der US 4 410 501, EP-A 0 311 983, US 4 666 692, DE-A 3 047 798 oder in der BE 1 001 038 beschrieben. Weitere im Rahmen der vorliegenden Erfindung gut einsetzbare titanhaltige Zeolithe, die eine von der MFI-Struktur verschiedene Struktur aufweisen, sind beispielsweise in der EP-A 0 405 978 beschrieben. Außer Silicium und Titan können derartige Zeolithe auch zusätzliche Elemente wie Aluminium (beschrieben u.a. in der DE-A 31 41 283), Gallium (EP-A 0 266 825), Bor (US 4 666 692) oder geringe Mengen an Fluor (EP-A 0 292 363) enthalten.

Weitere im Rahmen des Verfahrens der vorliegenden Erfindung verwendbare Zeolith-Katalysatoren sind u. a. in der US-A 5,430,000 und der WO 94/29408 beschrieben, deren diesbezüglicher Inhalt durch Inbezugnahme in die vorliegende Anmeldung übernommen wird.

Als weitere titanhaltige Zeolithe sind solche mit der Struktur des ZSM-48-Typs, ZSM-12-Typs, Ferrierit oder β-Zeolith und des Mordenits zu nennen.

Ferner lassen sich im erfindungsgemäßen Verfahren folgende Zeolith-Katalysatoren verwenden:

Katalysatoren mit Zeolith-Struktur, wie sie in der DE-A 196 23 611.8 beschrieben sind.

Dabei handelt es sich um Oxidationskatalysatoren auf der Basis von Titan- oder Vanadiumsilicaten mit Zeolith-Struktur, wobei bzgl. der Zeolith-Struktur auf die vorstehend als bevorzugt angegebenen Strukturen verwiesen wird. Diese Katalysatoren sind dadurch gekennzeichnet, daß sie, wie in obiger Anmeldung detailliert beschrieben, durch verfestigende Formgebungsprozesse geformt werden.

Darüber hinaus lassen sich im erfindungsgemäßen Verfahren Katalysatoren verwenden, wobei der Katalysator mindestens ein Element, ausgewählt aus der Gruppe der Elemente des Periodensystems Ia, IIa, IIIa, IVa, Va, VIa, VIIa, VIIIa, Ib, IIb, IIIb, IVb, Vb, VIb, VIIb umfaßt.

Ferner können Oxidationskatalysatoren auf der Basis von Titan- oder Vanadiumsilicaten mit Zeolith-Struktur mit einem Gehalt von 0,01 bis 30 Gew.-% an einem oder mehreren Edelmetallen aus der Gruppe Ruthenium, Rhodium, Palladium, Osmium, Iridium, Platin, Rhenium, Gold und Silber, die ebenfalls dadurch gekennzeichnet sind, daß sie durch verfestigende Formgebungsprozesse geformt worden sind; verwendet werden. Derartige Katalysatoren sind in der DE-A 196 23 609.6 beschrieben.

Bezüglich der verfestigenden Formgebungsprozesse, der Bindemittel sowie der Hilfsmittel und der Struktur der Oxidationskatalysatoren wird auf die DE-A 196 23 611.8 Bezug genommen.

Der in der DE-A 196 23 609.6 beschriebene Oxidationskatalysator weist einen Gehalt von 0,01 bis 30 Gew.-%, insbesondere 0,05 bis 15 Gew.-%, vor allem 0,1 bis 8 Gew.-%, jeweils bezogen auf die Menge der Titan- oder Vanadiumzeolithe, der genannten Edelmetalle auf. Hierbei wird Palladium besonders bevorzugt. Die Edelmetalle können auf den Katalysator in Form geeigneter Edelmetallkomponenten, beispielsweise in Form von wasserlöslichen Salzen, vor, während oder im Anschluß an den verfestigenden Formgebungsschritt aufgebracht werden.

Ferner können die folgenden Katalysatoren erfindungsgemäß verwendet werden:

Ein mindestens ein poröses oxidisches Material enthaltender Formkörper, der erhältlich ist durch ein Verfahren, das die folgenden Schritte umfaßt:
(I) Versetzen eines Gemischs, enthaltend ein poröses oxidisches Material oder ein Gemisch aus zwei oder mehr davon, mit einer Mischung, enthaltend mindestens einen Alkohol und Wasser, und
(II) Kneten, Verformen, Trocknen und Calcinieren des gemäß Stufe (I) versetzten Gemischs.

Details bezüglich dieses Katalysators sind der DE-A 197 23 751.7 zu entnehmen.

Ferner können erfindungsgemäß Siliciumdioxid enthaltende Feststoffe eingesetzt werden, die herstellbar sind durch ein Verfahren, das den folgenden Schritt (I) umfaßt:
(I) In-Kontakt-Bringen mindestens eines Vorläufers von Siliciumdioxid mit mindestens einem Strukturbildner in einem flüssigen Medium, dadurch gekennzeichnet, daß der Strukturbildner ein Polyethylenimin oder ein Gemisch aus zwei oder mehr davon ist.

Details bezüglich dieses Feststoffs sind der DE-A 197 32 865.2 zu entnehmen.

Weitere gut einsetzbare Katalysatoren stellen Formkörper dar, die einen inerten Träger und darauf aufgebracht mindestens ein Silicat, vorzugsweise ein kristallines Silicat, umfassen, und die erhältlich sind durch Aufbringen eines Gemischs, enthaltend mindestens ein Silicat und mindestens einen Metallsäureester oder ein Hydrolysat davon oder eine Kombination aus Metallsäureester und Hydrolysat davon, auf den inerten Träger, wie sie in der DE-A 197 54 924.1 beschrieben sind.

Ferner können erfindungsgemäß Formkörper verwendet werden, die mindestens ein Silicat und mindestens ein Metalloxid umfassen, und herstellbar sind durch ein Verfahren, das den folgenden Schritt (i) umfaßt:
(i) Vermischen des mindestens einen Silicats mit mindestens einem Metalloxid-Sol, das einen niedrigen Gehalt an Alkali- und Erdalkalimetallionen aufweist,
wie sie in der DE-A 198 15 879.3 beschrieben sind.

Ferner lassen sich erfindungsgemäß Titansilicalite mit RUT-Struktur verwenden, die herstellbar sind durch ein Verfahren, das die Schritte (i) und (ii) umfaßt:
(i) Herstellen einer Mischung aus mindestens einer SiO₂-Quelle und mindestens einer Titan-Quelle;
(ii) Kristallisation der Mischung aus (i) in einem Druckbehälter unter Zugabe mindestens einer Schablonenverbindung, wobei eine Suspension erhalten wird, dadurch gekennzeichnet, daß als Schablonenverbindung Amine oder Ammoniumsalze eingesetzt werden, die zur Stabilisierung von Käfigen der Silicatstruktur [4⁴5⁴6²] und [4⁴5⁶6⁵8¹] geeignet sind.

Details bezüglich dieser Katalysatoren sind in der DE-A 198 39 792.5 beschrieben.

Darüber hinaus lassen sich erfindungsgemäß die in der DE-A 198 47 630.2 beschriebenen Siliciumdioxide mit Meso- und Mikroporen verwenden, die vorzugsweise ein oder mehrere der folgenden Merkmale (i) bis (iii) aufweisen:
(i) Summe der spezifischen Oberflächen der Meso- und Mikroporen von mindestens 300 m²/g;
(ii) Summe der Porenvolumen der Meso- und Mikroporen von mindestens 0,2 ml/g;
(iii) Maximum der Porendurchmesserverteilung der Mesoporen bei mindestens 3 nm.

Weitere Details bezüglich dieser Katalysatoren lassen sich der oben erwähnten Anmeldung entnehmen.

Schichtsilicate sind Silicate mit einem zweidimensional verknüpften Silicatnetzwerk und werden beispielsweise in R. M. Barrer "Zeolites and Clay Minerals as Sorbents and Molecular Sieves", Academic Press 1978, Seiten 407 ff, insbesondere Seiten 413, 421 und 430 beschrieben. Dabei sind insbesondere Attapulgit und Sepiolit, Pyrophyllit, Talk, Muscovit, Paragonit, Phlogopit, Biotit, Lepidolit, Zinnwaldit, Margarit, Chloritoid, Seyberit, Vermiculite, Smectite, wie z.B. Montmorillonit, Saponit, Nontronit, Beidellit, Sauconit, Hectorit, Fluorhectorit, Seladonit, Glauconit, dioctahedraler Illit, trioctahedraler Illit, Beidellit I und Beidellit II zu nennen.

Bei Clathrasilen handelt es sich wiederum um dreidimensional verknüpfte Silicatstrukturen, deren Netzwerk in der Regel jedoch so eng ist, daß keine Moleküle mit einem kinetischen Durchmesser oberhalb 0,4 nm aufgenommen werden können, wie dies beispielsweise in B. Marler, H. Gies "Zeolites", 15. Auflage, Seiten 5/7 (1995) beschrieben wird.

In einer weiteren bevorzugten Ausführungsform des vorliegenden Verfahrens werden die vorstehend beschriebenen Silicat enthaltenden Katalysatoren nach vollständigem oder teilweisem Aktivitätsverlust regeneriert und vorzugsweise wieder bei der erfindungsgemäßen Umsetzung eingesetzt. Für die Regenerierung des erfindungsgemäß verwendeten Katalysators können prinzipiell alle aus dem Stand der Technik bekannten Verfahren zur Regenerierung von Silicat umfassenden Katalysatoren, insbesondere Zeolithkatalysatoren, verwendet werden. Dabei wird im allgemeinen der gebrauchte Katalysator bei Temperaturen im Bereich von 20 bis 700 °C in An- oder Abwesenheit von Sauerstoff oder Sauerstoff liefernden Substanzen so behandelt, daß die Aktivität des regenerierten Katalysators höher ist als die des gebrauchten Katalysators.

Im einzelnen sind dabei die bislang lediglich für Zeolithkatalysatoren beschriebenen Verfahren zu nennen:
1. ein Verfahren zur Regenerierung eines verbrauchten (Zeolith)-Katalysators, das das Erhitzen des verbrauchten Katalysators bei einer Temperatur von weniger als 400 °C, aber höher als 150 °C in Gegenwart von molekularem Sauerstoff für einen Zeitraum, der ausreichend zur Erhöhung der Aktivität des verbrauchten Katalysators ist, umfaßt;
2. ein Verfahren zur Regenerierung eines verbrauchten (Zeolith)-Katalysators, das das Erhitzen des verbrauchten Katalysators bei einer Temperatur von 150 °C bis 700 °C in Gegenwart eines Gasstroms, der höchstens 5 Vol.-% molekularen Sauerstoffs enthält, über einen Zeitraum, der ausreicht, um die Aktivität des verbrauchten Katalysators zu verbessern, umfaßt;
3. ein Verfahren zur Regenerierung von (Zeolith)-Katalysatoren, wobei der verbrauchte Katalysator durch Erhitzen bei 400 bis 500 °C in Gegenwart eines Sauerstoff enthaltenden Gases oder durch Waschen mit einem Lösungsmittel, vorzugsweise bei einer Temperatur, die 5 bis 150 °C höher ist, als die während der Umsetzung verwendete Temperatur;
4. ein Verfahren zur Regenerierung eines verbrauchten (Zeolith)-Katalysators durch Calcinieren desselben bei 550 °C an Luft oder durch Waschen mit Lösungsmitteln, wobei die Aktivität des Katalysators wiederhergestellt wird, wie dies in "Proc. 7^{th} Intern. Zeolite Conf. 1986 (Tokio)" beschrieben wird;
5. ein Verfahren zur Regenerierung eines (Zeolith)-Katalysators, das die folgenden Schritte (I) und (II) umfaßt:
   (I) Aufheizen eines zumindest teilweise deaktivierten Katalysators auf eine Temperatur im Bereich 250 °C bis 600 °C in einer Atmosphäre, die weniger als 2 Vol.-% Sauerstoff enthält, und
   (II) Beaufschlagen des Katalysators bei einer Temperatur im Bereich von 250 bis 800 °C, vorzugsweise 350 bis 600 °C, mit einem Gasstrom, der einen Gehalt an einer Sauerstoff liefernden Substanz oder an Sauerstoff oder an einem Gemisch aus zwei oder mehr davon im Bereich von 0,1 bis 4 Vol.-% aufweist,
      wobei das Verfahren auch die weiteren Stufen (III) und (IV),
   (III) Beaufschlagen des Katalysators bei einer Temperatur im Bereich von 250 bis 800 °C, vorzugsweise 350 bis 600 °C, mit einem Gasstrom, der einen Gehalt an einer sauerstoffliefernden Substanz oder an Sauerstoff oder an einem Gemisch aus zwei oder mehr davon im Bereich von mehr als 4 bis 100 Vol.-% aufweist,
   (IV) Abkühlen des in Stufe (III) erhaltenen regenerierten Katalysators in einem Inertgasstrom, der bis zu 20 Vol.-% eines Flüssigkeitsdampfes, ausgewählt aus der Gruppe bestehend aus Wasser, einem Alkohol, einem Aldehyd, einem Keton, einem Ether, einer Säure, einem Ester, einem Nitril, einem Kohlenwasserstoff sowie einem Gemisch aus zwei oder mehr davon,
   umfassen kann.

Bezüglich der Reaktionsbedingungen des erfindungsgemäßen Verfahrens gibt es keine besonderen Beschränkungen. Die Umsetzung kann bei subatmosphärischen, atmosphärischen oder superatmosphärischen Drücken durchgeführt werden, je nach der verwendeten Umsetzungstemperatur. Diese liegt im allgemeinen bei ungefähr 25 bis ungefähr 150 °C, vorzugsweise bei ungefähr 50 bis ungefähr 120 °C und insbesondere bei ungefähr 70 bis ungefähr 100 °C.

Als Lösungsmittel können sowohl organische Lösungsmittel als auch Wasser oder auch Gemische davon eingesetzt werden. Vorzugsweise wird in wäßriger Lösung oder Suspension gearbeitet.

Die Reaktionsdauer liegt im Bereich von einer Minute bis zu mehreren Stunden. Bezüglich des molaren Verhältnisses von Oxidationsmittel zu PMIDE existieren keinerlei Beschränkungen, wobei vorzugsweise mindestens 0,5 mol, weiter bevorzugt mindestens 1 mol Oxidationsmittel pro Mol PMIDE eingesetzt wird.

Wie bereits erwähnt, kann das Reaktionsgemisch mit dem Katalysator sowohl in Suspensions- als auch in Festbettfahrweise in Kontakt gebracht werden. Die Umsetzung kann in Form eines Batch-Betriebes diskontinuierlich oder kontinuierlich erfolgen.

Insbesondere zur Vermeidung von Sicherheitsrisiken wird der Sauerstoffgehalt während der Umsetzung so eingestellt, daß man sicher außerhalb der Explosionsgrenzen arbeitet. Dies geschieht beispielsweise durch Zumischen von geeigneten Inertgasen, wie z.B. Stickstoff.

Die vorliegende Erfindung soll nunmehr anhand einiger Beispiele erläutert werden:

### Beispiele:

### Beispiel 1

In einem 250 ml fassenden Dreihalskolben mit Rührer, Tropftrichter und Rückflußkühler wurden 20 g Katalysator (Cr/Zeolith mit BEA-Struktur und einem Chromgehalt von 2,8 Gew.-%) in 100 ml deionisiertem Wasser mit 34 g PMDIE zusammengegeben und unter Rühren auf 85 °C erhitzt. Nach Erreichen der Temperatur wurden 70 ml einer 30 Gew.-%-igen H₂O₂-Lösung zugesetzt und man ließ die Lösung für die Dauer von 1 Stunde reagieren. Nach dem Erkalten wurde der Katalysator abgetrennt und die klare Reaktionslösung analysiert. Der Gehalt an Glyphosate wurde mittels HPLC unter UV-Detektion zu 3,2 Gew.-% bestimmt, entsprechend einer Ausbeute von 18 Mol-% auf eingesetztes PMIDE.

### Beispiel 2

Beispiel 1 wurde wiederholt, wobei als Katalysator 20 g Montmorillonit (Schüttgewicht 670 g/l; spezifische Oberfläche 230 m²/g) zum Einsatz kamen. Der Gehalt an Glyphosate im Reaktionsaustrag betrug 6,6 Gew.-%, entsprechend einer Ausbeute von 44 % auf eingesetztes PMIDE.

## Patentansprüche

1. Verfahren zur Herstellung von N-Phosphonomethylglycin oder eines Salzes davon durch In-Kontakt-Bringen von Phosphonomethyliminodiessigsäure oder eines Salzes davon mit mindestens einem sauerstoffhaltigen Oxidationsmittel in Gegenwart eines Heterogenkatalysators, wobei der Heterogenkatalysator mindestens ein Silicat enthält.

2. Verfahren nach Anspruch 1, wobei das mindestens eine sauerstoffhaltige Oxidationsmittel ausgewählt wird aus einem Hydroperoxid, einem molekularen Sauerstoff enthaltenden Gas, einer Sauerstoff liefernden Verbindung, einem Stickoxid und Gemischen aus zwei oder mehreren davon.

3. Verfahren nach Anspruch 1 oder 2, wobei das mindestens eine Silicat ein Zeolith, ein Schichtsilicat, ein natürlich vorkommendes oder synthetisch hergestelltes Tonmineral, ein Clathrasil oder ein Gemisch aus zwei oder mehreren davon ist.

4. Verfahren nach Anspruch 3, wobei das mindestens eine kristalline Silicat ein Zeolith des Struktur-Typs ABW-, ACO-, AEI-, AEL-, AEN-, AET-, AFG-, AFI-, AFN-, AFO-, AFR-, AFS-, AFT-, AFX-, AFY-, AHT-, ANA-, APC-, APD-, AST-, ATN-, ATO-, ATS-, ATT-, ATV-, AWO-, AWW-, BEA, BIK-, BOG-, BPH-, BRE-, CAN-, CAS-, CFI-, CGF-, CGS-, CHA-, CHI-, CLO-, CON-, CZP-, DAC-, DDR-, DFO-, DFT-, DOH-, DON-, EAB-, EDI-, EMT-, EPI-, ERI-, ESV-, EUO-, FAU-, FER-, GIS-, GME-, GOO-, HEU-, IFR-, ISV-, ITE-, JBW-, KFI-, LAU-, LEV-, LIO-, LOS-, LOV-, LTA-, LTL-, LTN-, MAZ-, MCM-22, MEI-, MEL-, MEP-, MER-, MFI-, MFS-, MON-, MOR-, MSO-, MTF-, MTN-, MTT-, MTW-, MWW-, NAT-, NES-, NON-, OFF-, OSI-, PAR-, PAU-, PHI-, RHO-, RON-, RSN-, RTE-, RTH-, RUT-, SAO-, SAT-, SBE-, SBS-, SBT-, SFF-, SGT-, SOD-, STF-, STI-, STT-, TER-, THO-, TON-, TSC-, VET-, VFI-, VNI-, VSV-, WEI-, WEN-, YUG-, ZON- und ITQ-4 oder ein Gemisch aus zwei oder mehreren davon ist.

5. Verfahren nach einem der Ansprüche 1 bis 4, wobei der mindestens eine Heterogenkatalysator zusätzlich mindestens ein Element aus der Gruppe der Elemente des Periodensystems Ia, IIa, IIIa, IVa, Va, VIa, VIIa, VIIIa, Ib, IIb, IIIb, IVb, Vb, VIb, VIIb umfaßt.

6. Verfahren nach einem der Ansprüche 1 bis 5, wobei der Heterogenkatalysator nach vollständigem oder teilweisem Aktivitätsverlust regeneriert wird und der regenerierte Heterogenkatalysator wieder zur Herstellung von N-Phosphonomethylglycin oder eines Salzes davon ausgehend von Phosphonomethyliminodiessigsäure oder eines Salzes davon eingesetzt wird.

## Revendications

1. Procédé de préparation de N-phosphonométhylglycine ou de l'un de ses sels par mise en contact d'acide phosphonométhyliminodiacétique ou d'un de ses sels avec au moins un agent d'oxydation contenant de l'oxygène en présence d'un catalyseur hétérogène, où le catalyseur hétérogène contient au moins un silicate.

2. Procédé selon la revendication 1, où le au moins un agent d'oxydation contenant de l'oxygène est choisi parmi un hydroperoxyde, un gaz contenant de l'oxygène moléculaire, un composé libérant de l'oxygène, un oxyde d'azote et des mélanges de deux ou plus de deux d'entre eux.

3. Procédé selon la revendication 1 ou 2, où le au moins un silicate est une zéolithe, un silicate stratifié, un minéral argileux d'origine naturelle ou synthétique, un clathrasil ou un mélange de deux ou plus de deux d'entre eux.

4. Procédé selon la revendication 3, où le au moins un silicate cristallin est une zéolithe de type structurel ABW-, ACO-, AEI-, AEL-, AEN-, AET-, AFG-, AFI-, AFN-,AFO-,AFR-, AFS-, AFT-, AFX-, AFY-, AHT-, ANA-, APC-, APD-, AST-, ATN-, ATO-, ATS-, ATT-, ATV-, AWO-, AWW-, BEA, BIK-, BOG-, BPH-, BRE-, CAN-, CAS-, CFI-, CGF-, CGS-, CHA-, CHI-, CLO-, CON-, CZP-, DAC-, DDR-, DFO-, DFT -, DOH-, DON-, EAB-, EDI-, EMT-, EPI-, ERI-, ESV-, EUO-, FAU-, FER-, GIS-, GME-, GOO-, HEU-, IFR-, ISV-, ITE-, JBW-, KFI-, LAU-, LEV-, LIO-, LOS-, LOV-, LTA-, LTL-, LTN-, MAZ-, MCM-22, MEI-, MEL-, MEP-, MER-, MFI-, MFS-, MON-, MOR-, MSO-, MTF-, MTN-, *MTT-,* MTW-, MWW-, NAT-, NES-, NON-, OFF-, OSI-. PAR-, PAU-, PHI-, RHO-, RON-, RSN-, RTE-, RTH-, RUT-, SAO-, SA T -, SBE-, SBS-, SBT -, SFF-, SG1-, SOD-, STF-, STI-, STT-, TER-, THO-, TON-, TSC-, VET-, VFI-, VNI-, VSV -, WEI-, WEN-, YUG-, ZON- et ITQ-4 ou un mélange de deux ou plus de deux d'entre elles.

5. Procédé selon l'une des revendications 1 à 4, où le au moins un catalyseur hétérogène comprend en outre au moins un élément des groupes Ia, IIa, IIIa, IVa, Va, VIa, VIIa, VIIIa, Ib, IIb, IIIb, IVb, Vb, VIb, Vllb du système périodique.

6. Procédé selon l'une des revendications 1 à 5, où le catalyseur hétérogène est régénéré après perte partielle ou totale d'activité, et où le catalyseur hétérogène régénéré est remis en oeuvre pour la préparation de N-phosphonométhylglycine ou de l'un de ses sels à partir d'acide phosphonométhyliminodiacétique ou de l'un de ses sels.

## Claims

1. A process for preparing N-phosphonomethylglycine or a salt thereof by bringing phosphonomethyliminodiacetic acid or a salt thereof into contact with at least one oxygen-containing oxidant in the presence of a heterogeneous catalyst comprising at least one silicate.

2. A process as claimed in claim 1, wherein the oxygen-containing oxidant or oxidants is/are selected from the group consisting of hydroperoxides, gases comprising molecular oxygen, oxygen-donating compounds, nitrogen oxides and mixtures of two or more thereof.

3. A process as claimed in claim 1 or 2, wherein the silicate or silicates is/are selected from the group consisting of zeolites, sheet silicates, naturally occurring or synthetically produced clay minerals, clathrasils and mixtures of two or more thereof.

4. A process as claimed in claim 3, wherein the crystalline silicate or silicates is/are selected from the group consisting of zeolites of the structure types ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MCM-22, MEI, MEL, MEP, MER, MFI, MFS, MON, MOR, MSO , MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON and ITQ-4 and mixtures of two or more thereof.

5. A process as claimed in any of claims 1 to 4, wherein the heterogeneous catalyst further comprises at least one element selected from among the elements of groups Ia, IIa, IIIa, IVa, Va, VIa, VIIa, VIIIa, Ib, IIb, IIIb, IVb, Vb, VIb, VIIb of the Periodic Table.

6. A process as claimed in any of claims 1 to 5, wherein the heterogeneous catalyst is regenerated after complete or partial loss of activity and the regenerated heterogeneous catalyst is reused for preparing N-phosphonomethylglycine or a salt thereof from phosphonomethyliminodiacetic acid or a salt thereof.
